# EUROPÄISCHE PATENTSCHRIFT

(11) **EP 4 265 966 B1**
(45) Veröffentlichungstag und Bekanntmachung des Hinweises auf die Patenterteilung: **06.05.2026**
(21) Anmeldenummer: 22168938.3
(22) Anmeldetag: 20.04.2022
(51) Int. Cl.: F24C 15/20, A47J 36/38, A47J 43/046

(54) **DUNSTABZUGSVORRICHTUNG FÜR EIN SPEISENZUBEREITUNGSGERÄT, VERWENDUNG UND SYSTEM**
VAPOUR EXTRACTION DEVICE FOR A FOOD PREPARATION DEVICE, USE AND SYSTEM
DISPOSITIF HOTTE ASPIRANTE POUR UN APPAREIL DE PRÉPARATION ALIMENTAIRE, UTILISATION ET SYSTÈME

(43) Veröffentlichungstag der Anmeldung: 25.10.2023
(73) Patentinhaber: Vorwerk & Co. Interholding GmbH, 42275 Wuppertal (DE)
(72) Erfinder: LENKEIT, Nadine, 42349 Wuppertal (DE); MEIER, Steffen Marius, 44791 Bochum (DE); PETERSEN, Birgit, 58285 Gevelsberg (DE)
(74) Vertreter: Gille Hrabal Partnerschaftsgesellschaft mbB Patentanwälte

(56) Entgegenhaltungen:
- EP-A1- 3 211 325
- EP-B1- 3 377 821
- EP-B1- 3 513 127
- FR-A1- 2 761 620
- JP-A- 2000 018 601
- JP-U- S5 468 464
- US-A1- 2012 204 855

## Beschreibung

Die Erfindung betrifft eine Dunstabzugsvorrichtung für ein Speisenzubereitungsgerät, eine Verwendung einer Dunstabzugsvorrichtung und ein System zur Speisenzubereitung.

Bei der Zubereitung von Speisen mit einem Speisenzubereitungsgerät, beispielsweise einer Küchenmaschine, wird häufig Dunst freigesetzt. Dies ist besonders bei Garprozessen der Fall. Dunst bezeichnet Luft, die Dampf, Fett und/oder Gerüche enthält. Derartige Gerüche sind zumindest in Wohnbereichen oft unerwünscht. Enthaltene Feuchtigkeit kann zudem zu unerwünschter Kondensation an z. B. Küchenschränken führen. Demnach besteht Bedarf für ein Filtern des von Speisenzubereitungsgeräten erzeugten Dunstes.

Eine Lösung besteht darin, ein Speisenzubereitungsgerät auf einem Herd zu positionieren, um eine über dem Herd fest installierte, herkömmliche Dunstabzugshaube zu nutzen. Allerdings ist ein Herd keine geeignete Stellfläche für ein Speisenzubereitungsgerät, da bei Restwärme des Herdes oder bei versehentlichem Einschalten einer Herdplatte die Gefahr von Beschädigungen oder Brand droht. Zudem wäre der Herd dann blockiert und damit nicht mehr nutzbar. Auch benötigen herkömmliche Dunstabzugshauben aufgrund des großen Abstands zum Entstehungsort des Dunstes große Saugleistungen, was mit Geräuschentwicklung und hohem Energiebedarf einhergeht. Vorrichtungen, die Dunst aus einer unteren Position nach unten absaugen, sind aufgrund der Höhe von Speisenzubereitungsgeräten häufig nicht zusammen mit diesen verwendbar.

Die Druckschriften EP 3 377 821 B1, EP 3 513 127 B1 und US 2012 / 204 855 A1 offenbaren Vorrichtungen zum Erhitzen von Speisen mit einer Heizplatte, die auch zum Dunstabzug eingerichtet sind. Die Druckschriften FR 2 761 620 A1, EP 3 211 325 A1, JP 2000 018 601 A und JP S54 68 464 U beschreiben Dunstabzugsvorrichtungen.

Es ist die Aufgabe der Erfindung, eine weiterentwickelte Dunstabzugsvorrichtung für ein Speisenzubereitungsgerät, eine Verwendung einer Dunstabzugsvorrichtung und ein System zur Verfügung zu stellen, mit denen zumindest einige der oben genannten Nachteile behoben werden.

Die Aufgabe wird gelöst durch ein Dunstabzugsvorrichtung gemäß Anspruch 1 sowie eine Verwendung einer Dunstabzugsvorrichtung und ein System gemäß den nebengeordneten Ansprüchen. Vorteilhafte Ausgestaltungen sind in den Unteransprüchen angegeben.

Zur Lösung der Aufgabe dient eine Dunstabzugsvorrichtung für ein Speisenzubereitungsgerät. Die Dunstabzugsvorrichtung umfasst ein Gehäuse mit einer Einsaugöffnung, ein im Gehäuse angeordnetes Filter und eine Saugeinrichtung, mit der Dunst aus einer Speisenzubereitung mit dem Speisenzubereitungsgerät durch die Einsaugöffnung eingesaugt und durch das Filter gefördert werden kann. Die Dunstabzugsvorrichtung umfasst ferner eine Aufstellfläche zum Aufstellen des Speisenzubereitungsgeräts.

Die erfindungsgemäße Lösung ist eine Dunstabzugsvorrichtung zur Verwendung mit einem Speisenzubereitungsgerät. Diese filtert den Dunst, der bei der Speisenzubereitung mit dem Speisenzubereitungsgerät entsteht. Auf diese Weise wird die Freisetzung von Dampf bzw. Gerüchen reduziert. Die Nutzung einer Dunstabzugshaube ist nicht notwendig. Die Aufstellfläche ermöglicht, das Speisenzubereitungsgerät in einer vordefinierten Position abzustellen, sodass der Abstand zwischen dem Speisenzubereitungsgerät und der Absaugung im Vergleich zu einer herkömmlichen Dunstabzugshaube deutlich verringert ist. Auf diese Weise können Geräuschemissionen verringert und Energie gespart werden. Auch ist der Abstand definiert, so dass die Saugeinrichtung auf diesen Abstand optimiert sein kann. Darüber hinaus ist die erfindungsgemäße Lösung nicht ortsgebunden und kann daher flexibel an verschiedenen Orten benutzt werden.

Ein Speisenzubereitungsgerät ist ein Gerät, mit dem eine Speise zubereitet werden kann. Erfindungsgemäß ist das Speisenzubereitungsgerät eine Küchenmaschine. Die Küchenmaschine ist zur Speisenzubereitung durch Zerkleinern, Rühren und/oder Erhitzen eingerichtet. Das Speisenzubereitungsgerät ist ein transportables Gerät, das an einer beliebigen Position, beispielsweise auf einer Küchenarbeitsfläche, abgestellt werden kann.

Das Gehäuse dient der Aufnahme des Filters und/oder der Saugeinrichtung. Das Filter und/oder die Saugeinrichtung sind insbesondere zumindest teilweise im Gehäuse angeordnet oder anordbar. Die Saugeinrichtung kann davon abweichend auch außen am Gehäuse angeordnet sein. Das Gehäuse ist eine das Filter und ggf. die Saugeinrichtung schützende Hülle. Das Gehäuse kann daher aus einem festen Material wie zum Beispiel Metall und/oder Kunststoff bestehen. Im Gehäuse befindet sich eine Einsaugöffnung zum Einsaugen des Dunstes ins Innere des Gehäuses. Die bewirkt. Die Knöpfe können so eingerichtet sein, dass ein Heben bzw. Senken nur erfolgt, solange der jeweilige Knopf gedrückt wird (auch bezeichnet als Long Press). Dies ermöglicht eine zielgerichtete manuelle Einstellung auf die gewünschte Höhe. Die Knöpfe können alternativ so eingerichtet sein, dass ein Heben bzw. Senken durch einmaliges Drücken des entsprechenden Kopfes aktiviert wird und dann automatisch eine Bewegung in eine voreingestellte Position erfolgt, insbesondere in eine Nutzposition oder eine versenkte Position (auch bezeichnet als Short Press). Sind mehrere Nutzposition vorhanden, ist eventuell ein zweites Drücken des Knopfes notwendig. Dies ermöglicht eine einfache und bedienerfreundliche Einstellung einer gewünschten Höhe.

In einer Ausführungsform weist das Gehäuse zwei Teile auf, wobei jedes der zwei Teile des Gehäuses unabhängig von dem anderen Teil des Gehäuses aus der Nutzposition nach unten bewegt und im Schrank versenkt werden kann und aus der versenkten Position wieder nach oben bewegt werden kann. Typischerweise ist das Gehäuse durch einen vertikalen Spalt unterteilt. Bevorzugt weist jedes der zwei Teile eine Einsaugöffnung auf. Typischerweise ist jede Einsaugöffnung im oberen Bereich des jeweiligen Teils angeordnet. Insbesondere sind die beiden Teile nebeneinander angeordnet. Typischerweise sind die beiden Teile unmittelbar benachbart, sodass kein wesentlicher Zwischenraum vorhanden ist. Diese Ausgestaltung ermöglicht, dass mehrere Küchengeräte nebeneinander auf der Aufstellfläche aufgestellt werden können, um mehrere Speisenzubereitungsprozesse parallel auszuführen. Beispielsweise können so gleichzeitig eine Küchenmaschine und ein anderes Speisenzubereitungsgerät wie beispielsweise ein Grill oder ein Waffeleisen betrieben werden.

Insbesondere ist jedes der zwei Teile auf unterschiedlichen Höhenpositionen positionierbar. Auf diese Weise können unterschiedliche Höhen der verwendeten Geräte berücksichtigt werden und entstehender Dunst jedes Gerätes kann in der Nähe seines jeweiligen Entstehungsortes eingesaugt werden. Insbesondere ist der durch die Einsaugöffnung des jeweiligen Teils realisierbare Dunststrom für jedes Teil separat einstellbar. Auf diese Weise können gleichzeitig für unterschiedliche Speisenzubereitungsprozesse unterschiedliche Saugleistungen realisiert werden.

Die Dunstabzugsvorrichtung ist dazu eingerichtet, auf der Basis von Steuerbefehlen einer Steuerung einen Parameter der Saugeinrichtung einzustellen. In einer Ausgestaltung ist die Dunstabzugsvorrichtung dazu eingerichtet, auf der Basis von Steuerbefehlen einer Steuerung die Hebe- und Senkeinrichtung zu steuern. Typischerweise gibt die Steuerung Steuerbefehle an die Hebe- und Senkeinrichtung bzw. die Saugeinrichtung, so dass eine Höhenposition einer Einsaugöffnung und/oder ein Parameter der Saugeinrichtung eingestellt werden kann. Der Parameter der Saugeinrichtung kann beispielsweise eine Drehgeschwindigkeit, ein Motorstrom und/oder ein anzusaugender Volumenstrom sein.

Die Dunstabzugsvorrichtung kann die Steuerung umfassen. Alternativ ist die Dunstabzugsvorrichtung so ausgestaltet, dass sie zu diesem Zweck mit einer externen Steuerung kommunizieren kann. Die externe Steuerung kann beispielsweise eine Datenverarbeitungseinheit eines tragbaren elektronischen Geräts, beispielsweise eines Smartphones oder eines Tablets, oder des Speisenzubereitungsgeräts sein. Im Fall einer externen Steuerung umfasst die Dunstabzugsvorrichtung typischerweise eine Schnittstelle, mit der entsprechende Signale der Steuerung empfangen werden können. Die Schnittstelle kann zum Empfang von Daten mittels Bluetooth, WiFi, Funk und/oder über das Internet eingerichtet sein.

In einer Ausführungsform umfasst die Dunstabzugsvorrichtung eine Eingabeeinrichtung zur Eingabe des Parameters und/oder zum Steuern der Saugeinrichtung. Beispielsweise kann als Eingabeeinrichtung wenigstens einen Schalter und/oder wenigsten sein Knopf vorgesehen sein. Beispielsweise kann eine Eingabeeinrichtung ähnlich einer herkömmlichen Dunstabzugshaube vorgesehen sein. In einer Ausführungsform umfasst die Dunstabzugsvorrichtung eine Ausgabeeinrichtung, mit der eine Information an den Benutzer ausgegeben werden kann. Die Information kann den zumindest einen Parameter umfassen und/oder eine Aufforderung zur Eingabe und/oder eine Bestätigung. Die Eingabeeinrichtung und die Ausgabeeinrichtung können gemeinsam als Ein- und Ausgabeeinrichtung vorhanden sein, beispielsweise in einem berührungsempfindlichen Display.

In einer Ausgestaltung weist die Dunstabzugsvorrichtung einen Sensor zur Messung einer Eigenschaft eines Dunstes aus einer Speisenzubereitung auf und die Steuerung ist dazu eingerichtet, eine Saugleistung der Saugeinrichtung auf der Basis der gemessenen Eigenschaft zu steuern. Eine Saugleistung meint die Leistung, die der Motor der Saugeinrichtung zum Fördern des Dunstes nutzt. Diese korreliert mit dem geförderten Volumenstrom. Beispielsweise kann eine Luftfeuchtigkeit des Dunstes gemessen werden und bei hoher Luftfeuchtigkeit automatisiert die Saugeinrichtung so gesteuert werden, dass ein größerer Volumenstrom eingesaugt wird. Alternativ oder ergänzend kann ein Gehalt an Wasserdampf oder Partikel im Dunst gemessen werden, um die Saugeinrichtung entsprechend zu steuern. Die Messung einer Eigenschaft eines Dunstes kann außen am Gehäuse, z. B. im Bereich einer Einsaugöffnung, oder im Inneren eines Strömungskanals Gehäuse erfolgen. Dies ermöglicht ein Steuern bzw. Regeln der Dunstabzugsvorrichtung und kann auf diese Weise mit geringem Aufwand eine Qualität des gefilterten Dunsts sicherstellen und gleichzeitig den Energiebedarf und die Geräuschentwicklung minimieren.

In einer Ausgestaltung weist die Dunstabzugsvorrichtung einen Sensor zur Ermittlung einer Information bezüglich einer Höhe des Speisenzubereitungsgeräts auf und die Steuerung ist dazu eingerichtet, die Hebe- und Senkeinrichtung auf der Basis der durch den Sensor ermittelten Information zu steuern. Die Information kann beispielsweise die Gesamthöhe des Speisenzubereitungsgeräts sein. Die Information kann den Typ des Speisenzubereitungsgeräts oder das Vorhandensein eines optionalen Zubehörteils charakterisieren. Der Sensor kann beispielsweise ein optischer Sensor oder ein Ultraschallsensor sein. Die Steuerung der Dunstabzugsvorrichtung ist so eingerichtet, dass sie auf der Basis der durch den Sensor ermittelten Information eine geeignete Höhe einstellt. Hierbei können unterschiedliche Höhen voreingestellt sein, die nach der ermittelten Information ausgewählt werden, oder es kann eine Höhe unmittelbar aus der ermittelten Information abgeleitet oder berechnet werden.

Erfindungsgemäß ist die Dunstabzugsvorrichtung zur Herstellung einer Datenverbindung mit dem Speisenzubereitungsgerät eingerichtet, sodass die Steuerung auf Informationen vom Speisenzubereitungsgerät zugreifen kann und das Einstellen des Parameters der Saugeinrichtung auf der Basis der Informationen erfolgt. In einer Ausgestaltung erfolgt das Steuern der Hebe- und Senkeinrichtung auf der Basis der Informationen. Die Information kann eine Information des Speisenzubereitungsgeräts und/oder der Speisenzubereitung umfassen.

Die Datenverbindung wird insbesondere mit dem auf der Aufstellfläche aufgestellten Speisenzubereitungsgerät hergestellt. Die Datenverbindung ist insbesondere eine drahtlose Verbindung, beispielsweise über Bluetooth, WiFi, Funk und/oder über das Internet. Eine kabelgebundene Verbindung ist jedoch nicht ausgeschlossen. Auf diese Weise kann die Steuerung auf Informationen des Speisenzubereitungsgeräts und/oder Aufstellfläche typischerweise größer als 10 cm, insbesondere größer als 15 cm und bevorzugt größer als 20 cm und/oder kleiner als 40 cm, typischerweise kleiner als 35 cm, insbesondere kleiner als 30 cm. Im zweiten Fall ist die Breite der Aufstellfläche typischerweise größer als 30 cm, insbesondere größer als 35 cm und bevorzugt größer als 40 cm und/oder insbesondere kleiner als 65 cm, bevorzugt kleiner als 55 cm.

In einer Ausgestaltung ist die Aufstellfläche eine im Wesentlichen ebene Fläche. Die Aufstellfläche ist typischerweise horizontal ausgerichtet. Sie kann eine rutschhemmende Oberfläche aufweisen, beispielsweise aus Kunststoff oder Gummi.

In einer Ausgestaltung ist ein horizontal gemessener Abstand, z. B. in Draufsicht gesehen, zwischen einem Mittelpunkt der Aufstellfläche und der Einsaugöffnung kleiner als 25 cm, bevorzugt kleiner als 20 cm, und/oder größer als 5 cm, insbesondere größer als 10 cm. Der Mittelpunkt ist der Punkt, der sich mittig auf der Aufstellfläche befindet, insbesondere der Flächenschwerpunkt der Aufstellfläche. In einer Ausgestaltung ist ein horizontal gemessener Abstand zwischen der Aufstellfläche und der Einsaugöffnung kleiner als 15 cm, insbesondere kleiner als 10 cm, bevorzugt kleiner als 5 cm. Durch den kurzen Weg kann der mit der Saugeinrichtung realisierte Dunststrom und damit der Geräuschpegel reduziert werden und es kann ein besonders energieeffizienter Betrieb gewährleistet werden.

In einer Ausgestaltung ist ein vertikal gemessener Abstand, z. B. in Seitenansicht gesehen, zwischen der Aufstellfläche und der Einsaugöffnung nicht geringer als 20 cm und/oder nicht größer als 60 cm. Gemeint ist der Abstand zwischen der Oberkante der Aufstellfläche, auf die das Speisenzubereitungsgerät aufgestellt wird, und dem obersten bzw. untersten Punkt der Einsaugöffnung. Der Abstand ist insbesondere nicht geringer als 25 cm oder 30 cm und/oder nicht größer als 50 cm oder 45 cm. Die Abstände beziehen sich auf eine unten beschriebene Nutzposition.

Der Abstand ist nicht geringer als 20 cm, damit der Dunst etwa auf der Höhe eingesaugt werden kann, auf der er aus dem Speisenzubereitungsgerät herausströmt. Somit können der Dunststrom und der Geräuschpegel reduziert werden und es kann ein energieeffizienter Betrieb gewährleistet werden. Der Abstand ist nicht übermäßig groß, um die Bauhöhe des Gehäuses derart zu begrenzen, dass die Verwendung auf einer Küchenarbeitsplatte unter Oberschränken möglich ist.

In einer Ausführungsform hat das Gehäuse eine Höhe zwischen 45 cm und 60 cm. Die Höhe wird insbesondere gemessen zwischen einer Unterseite zum Aufstellen auf einer Arbeitsfläche und dem höchsten Punkt des Gehäuses. Die Einsaugöffnung kann sich bis zur Oberseite des Gehäuses oder bis kurz darunter erstrecken. So wird die Bauhöhe gering gehalten und gleichzeitig ein besonders effizientes Absaugen erzielt.

In einer Ausgestaltung sind das Gehäuse und ein die Aufstellfläche aufweisender Teil der Dunstabzugsvorrichtung einstückig ausgeführt, fest miteinander verbunden oder fest miteinander verbindbar. Auf diese Weise wird eine stabile Einheit bereitgestellt und es wird eine Fehlbedienung ausgeschlossen. Bei einer festen Verbindung ist die Dunstabzugsvorrichtung zweiteilig ausgebildet, wobei das Gehäuse ein erster Teil ist und ein zweiter Teil der Dunstabzugsvorrichtung die Aufstellfläche umfasst.

In einer Ausgestaltung ist im Gehäuse wenigstens ein von außen zugänglicher Stauraum zum Verstauen von Gegenständen vorhanden, wobei insbesondere ein Verschluss zum Verschließen des Stauraums vorhanden ist. Der Stauraum kann zum Verstauen von Zubehör dienen. Ein Verschluss kann als Klappe ausgeführt sein. Alternativ oder zusätzlich kann ein Stauraum als Schublade ausgeführt sein, wobei die Vorderwand der Schublade in geschlossenem Zustand den Verschluss ausbildet.

Insbesondere ist der Stauraum von einer Seitenwand des Gehäuses aus zugänglich, sodass ein Zugriff auf den Stauraum auch möglich ist, wenn ein Speisenzubereitungsgerät auf der Aufstellfläche aufgestellt ist. In einer Ausführungsform sind auf jeder Seite ein oder mehrere Stauräume vorhanden.

In einer Ausgestaltung weist die Dunstabzugsvorrichtung eine Unterseite zum Aufstellen auf einer Arbeitsfläche auf. Die Dunstabzugsvorrichtung ist also so eingerichtet, dass sie mit ihrer Unterseite beispielsweise auf eine Küchenarbeitsfläche oder einen Tisch gestellt werden kann. Die Unterseite eine im Wesentlichen ebene Fläche sein und/oder Standfüße aufweisen, die beispielsweise aus Gummi bestehen. Insbesondere ist die Unterseite des Gehäuses und ggf. der Aufstellfläche in einer Ebene angeordnet, sodass ein festes Aufstellen möglich ist. Der die Aufstellfläche aufweisende Teil der Dunstabzugsvorrichtung kann eine Höhe aufweisen, die geringer ist als 5 cm, insbesondere als 3 cm und bevorzugt geringer als 2 cm oder als 1 cm.

In einer Ausgestaltung umfasst die Dunstabzugsvorrichtung unter der Aufstellfläche einen Schrank. Insbesondere sind in dem Schrank mehrere von außen zugängliche Stauräume angeordnet. Insbesondere sind die Stauräume als Schubladen ausgeführt. Der Schrank ist insbesondere nicht lediglich unterhalb der Aufstellfläche, also in einer niedrigeren Höhenposition als die Aufstellfläche, sondern unter der Aufstellfläche angeordnet, sodass das Speisenzubereitungsgerät bei bestimmungsgemäßer Verwendung mittelbar auf dem Schrank steht. Der Schrank ist typischerweise auch unter dem Gehäuse angeordnet.

In einer Ausführungsform ist der Schrank fahrbar. Mit anderen Worten weist der Schrank Rollen bzw. Räder auf, sodass er gefahren werden kann. Insbesondere weist der Schrank auch eine Feststelleinrichtung auf, sodass er in der Zielposition festgestellt werden kann. Der Schrank kann eine Höhe größer als 70 cm, insbesondere größer als 80 cm, und/oder kleiner als 105 cm, insbesondere kleiner als 95 cm aufweisen.

In einer Ausführungsform umfasst die Dunstabzugsvorrichtung ein klappbar angeordnetes Arbeitsplattenelement, welches aus einer platzsparenden Stauposition in eine horizontale Arbeitsposition und zurück geschwenkt werden kann. Die Positionen beziehen sich auf die Oberfläche des Arbeitsplattenelements. Es können mehrere, beispielsweise zwei Arbeitsplattenelemente vorhanden sein. Insbesondere ist das mindestens eine Arbeitsplattenelement seitlich angeordnet. In einer Ausführungsform ist auf beiden Seiten jeweils ein Arbeitsplattenelement vorhanden. Die Stauposition kann im Wesentlichen vertikal sein. Es ist insbesondere eine Befestigung vorgesehen, um das Arbeitsplattenelement in der Stauposition und/oder in der Arbeitsposition zu befestigen.

In einer Ausgestaltung weist die Dunstabzugsvorrichtung eine Hebe- und Senkeinrichtung auf, mit welcher zumindest ein Teil des Gehäuses nach oben und unten bewegt werden kann, um auf diese Weise unterschiedliche Höhenpositionen einzustellen. Insbesondere kann der Teil des Gehäuses aus einer Nutzposition nach unten bewegt und versenkt werden und aus der versenkten Position wieder nach oben bewegt werden. Der auf diese Weise bewegbare Teil umfasst bevorzugt die Einsaugöffnung und insbesondere ebenfalls das Filter und/oder die Saugeinrichtung. Die Hebe- und Senkeinrichtung umfasst typischerweise einen Elektromotor zum Antreiben einer Mechanik und die Mechanik, mit zumindest ein Teil des Gehäuses bewegt werden kann. Insbesondere kann ein Teil des Gehäuses in einen weiteren Teil des Gehäuses hinein bewegt oder versenkt werden. Versenken meint ein zumindest teilweises und insbesondere vollständiges Versenken des Teils des Gehäuses.

Es gibt wenigstens eine Nutzposition, in der die Dunstabzugsvorrichtung so konfiguriert ist, dass Dunst aus der Speisenzubereitung eingesaugt und gefiltert werden kann. Insbesondere ist in der Nutzposition eine Einsaugöffnung auf einer Höhe positioniert, die sich nahe der Oberseite des Speisenzubereitungsgeräts befindet. Es kann zudem eine versenkte Position geben, in der das Gehäuse der Dunstabzugsvorrichtung platzsparend verstaut ist. In der versenkten Position ist eine Nutzung der Dunstabzugsvorrichtung typischerweise nicht vorgesehen. Eine Einsaugöffnung der Dunstabzugsvorrichtung befindet sich typischerweise im oberen Bereich des versenkbaren Teils des Gehäuses.

So kann das Gehäuse bei Nichtbenutzung auf einfache Weise platzsparend und vor Verschmutzungen geschützt verstaut werden. Der Schrank kann wie ein herkömmlicher, ggf. fahrbarer, Schrank verwendet werden. Insbesondere ist die Dunstabzugsvorrichtung so ausgestaltet, dass nach dem Versenken eine oben liegende Arbeitsplatte vorhanden ist. Der entsprechende Teil des Gehäuses kann an der Oberseite die Arbeitsplatte aufweisen.

In einer Ausführungsform sind mehrere Nutzpositionen vorgegeben, in denen das Gehäuse der Dunstabzugsvorrichtung und damit die Einsaugöffnung in jeweils unterschiedlichen Höhenpositionen angeordnet ist. Auf diese Weise kann die Höhe der Einsaugöffnung beispielsweise daran angepasst werden, ob das Speisenzubereitungsgerät zusammen mit einem Zubehörteil verwendet wird, welches oben auf ein Speisenzubereitungsgefäß des Speisenzubereitungsgeräts aufgesetzt ist, oder nicht. Ein solches Zubehörteil kann beispielsweise ein Aufsatz zum Dampfgaren sein. Ist ein solches Zubehörteil vorhanden, gelangt der Dunst aus der Speisenzubereitung an einer höheren Position in die Umgebung und kann folglich von einer höheren Position aus eingesaugt werden.

In einer Ausführungsform umfasst die Dunstabzugsvorrichtung eine Eingabeeinrichtung, mit der ein Befehl zum Aktivieren der Hebe- und Senkeinrichtung für ein Heben oder Senken des Gehäuses eingegeben werden kann. Beispielsweise können als Eingabeeinrichtung zwei Knöpfe vorhanden sein, wobei der eine Knopf ein Senken des Gehäuses bewirkt und der andere Knopf ein Anheben des Gehäuses bewirkt. Die Knöpfe können so eingerichtet sein, dass ein Heben bzw. Senken nur erfolgt, solange der jeweilige Knopf gedrückt wird (auch bezeichnet als Long Press). Dies ermöglicht eine zielgerichtete manuelle Einstellung auf die gewünschte Höhe. Die Knöpfe können alternativ so eingerichtet sein, dass ein Heben bzw. Senken durch einmaliges Drücken des entsprechenden Kopfes aktiviert wird und dann automatisch eine Bewegung in eine voreingestellte Position erfolgt, insbesondere in eine Nutzposition oder eine versenkte Position (auch bezeichnet als Short Press). Sind mehrere Nutzposition vorhanden, ist eventuell ein zweites Drücken des Knopfes notwendig. Dies ermöglicht eine einfache und bedienerfreundliche Einstellung einer gewünschten Höhe.

In einer Ausführungsform weist das Gehäuse zwei Teile auf, wobei jedes der zwei Teile des Gehäuses unabhängig von dem anderen Teil des Gehäuses aus der Nutzposition nach unten bewegt und im Schrank versenkt werden kann und aus der versenkten Position wieder nach oben bewegt werden kann. Typischerweise ist das Gehäuse durch einen vertikalen Spalt unterteilt. Bevorzugt weist jedes der zwei Teile eine Einsaugöffnung auf. Typischerweise ist jede Einsaugöffnung im oberen Bereich des jeweiligen Teils angeordnet. Insbesondere sind die beiden Teile nebeneinander angeordnet. Typischerweise sind die beiden Teile unmittelbar benachbart, sodass kein wesentlicher Zwischenraum vorhanden ist. Diese Ausgestaltung ermöglicht, dass mehrere Küchengeräte nebeneinander auf der Aufstellfläche aufgestellt werden können, um mehrere Speisenzubereitungsprozesse parallel auszuführen. Beispielsweise können so gleichzeitig eine Küchenmaschine und ein anderes Speisenzubereitungsgerät wie beispielsweise ein Grill oder ein Waffeleisen betrieben werden.

Insbesondere ist jedes der zwei Teile auf unterschiedlichen Höhenpositionen positionierbar. Auf diese Weise können unterschiedliche Höhen der verwendeten Geräte berücksichtigt werden und entstehender Dunst jedes Gerätes kann in der Nähe seines jeweiligen Entstehungsortes eingesaugt werden. Insbesondere ist der durch die Einsaugöffnung des jeweiligen Teils realisierbare Dunststrom für jedes Teil separat einstellbar. Auf diese Weise können gleichzeitig für unterschiedliche Speisenzubereitungsprozesse unterschiedliche Saugleistungen realisiert werden.

Die Dunstabzugsvorrichtung ist dazu eingerichtet, auf der Basis von Steuerbefehlen einer Steuerung einen Parameter der Saugeinrichtung einzustellen.

In einer Ausgestaltung ist die Dunstabzugsvorrichtung dazu eingerichtet, auf der Basis von Steuerbefehlen der Steuerung die Hebe- und Senkeinrichtung zu steuern. Typischerweise gibt die Steuerung Steuerbefehle an die Hebe- und Senkeinrichtung bzw. die Saugeinrichtung, so dass eine Höhenposition einer Einsaugöffnung und/oder ein Parameter der Saugeinrichtung eingestellt werden kann. Der Parameter der Saugeinrichtung kann beispielsweise eine Drehgeschwindigkeit, ein Motorstrom und/oder ein anzusaugender Volumenstrom sein.

Die Dunstabzugsvorrichtung kann die Steuerung umfassen. Alternativ ist die Dunstabzugsvorrichtung so ausgestaltet, dass sie zu diesem Zweck mit einer externen Steuerung kommunizieren kann. Die externe Steuerung kann beispielsweise eine Datenverarbeitungseinheit eines tragbaren elektronischen Geräts, beispielsweise eines Smartphones oder eines Tablets, oder des Speisenzubereitungsgeräts sein. Im Fall einer externen Steuerung umfasst die Dunstabzugsvorrichtung typischerweise eine Schnittstelle, mit der entsprechende Signale der Steuerung empfangen werden können. Die Schnittstelle kann zum Empfang von Daten mittels Bluetooth, WiFi, Funk und/oder über das Internet eingerichtet sein.

In einer Ausführungsform umfasst die Dunstabzugsvorrichtung eine Eingabeeinrichtung zur Eingabe des Parameters und/oder zum Steuern der Saugeinrichtung. Beispielsweise kann als Eingabeeinrichtung wenigstens einen Schalter und/oder wenigsten sein Knopf vorgesehen sein. Beispielsweise kann eine Eingabeeinrichtung ähnlich einer herkömmlichen Dunstabzugshaube vorgesehen sein. In einer Ausführungsform umfasst die Dunstabzugsvorrichtung eine Ausgabeeinrichtung, mit der eine Information an den Benutzer ausgegeben werden kann. Die Information kann den zumindest einen Parameter umfassen und/oder eine Aufforderung zur Eingabe und/oder eine Bestätigung. Die Eingabeeinrichtung und die Ausgabeeinrichtung können gemeinsam als Ein- und Ausgabeeinrichtung vorhanden sein, beispielsweise in einem berührungsempfindlichen Display.

In einer Ausgestaltung weist die Dunstabzugsvorrichtung einen Sensor zur Messung einer Eigenschaft eines Dunstes aus einer Speisenzubereitung auf und die Steuerung ist dazu eingerichtet, eine Saugleistung der Saugeinrichtung auf der Basis der gemessenen Eigenschaft zu steuern. Eine Saugleistung meint die Leistung, die der Motor der Saugeinrichtung zum Fördern des Dunstes nutzt. Diese korreliert mit dem geförderten Volumenstrom. Beispielsweise kann eine Luftfeuchtigkeit des Dunstes gemessen werden und bei hoher Luftfeuchtigkeit automatisiert die Saugeinrichtung so gesteuert werden, dass ein größerer Volumenstrom eingesaugt wird. Alternativ oder ergänzend kann ein Gehalt an Wasserdampf oder Partikel im Dunst gemessen werden, um die Saugeinrichtung entsprechend zu steuern. Die Messung einer Eigenschaft eines Dunstes kann außen am Gehäuse, z. B. im Bereich einer Einsaugöffnung, oder im Inneren eines Strömungskanals Gehäuse erfolgen. Dies ermöglicht ein Steuern bzw. Regeln der Dunstabzugsvorrichtung und kann auf diese Weise mit geringem Aufwand eine Qualität des gefilterten Dunsts sicherstellen und gleichzeitig den Energiebedarf und die Geräuschentwicklung minimieren.

In einer Ausgestaltung weist die Dunstabzugsvorrichtung einen Sensor zur Ermittlung einer Information bezüglich einer Höhe des Speisenzubereitungsgeräts auf und die Steuerung ist dazu eingerichtet, die Hebe- und Senkeinrichtung auf der Basis der durch den Sensor ermittelten Information zu steuern. Die Information kann beispielsweise die Gesamthöhe des Speisenzubereitungsgeräts sein. Die Information kann den Typ des Speisenzubereitungsgeräts oder das Vorhandensein eines optionalen Zubehörteils charakterisieren. Der Sensor kann beispielsweise ein optischer Sensor oder ein Ultraschallsensor sein. Die Steuerung der Dunstabzugsvorrichtung ist so eingerichtet, dass sie auf der Basis der durch den Sensor ermittelten Information eine geeignete Höhe einstellt. Hierbei können unterschiedliche Höhen voreingestellt sein, die nach der ermittelten Information ausgewählt werden, oder es kann eine Höhe unmittelbar aus der ermittelten Information abgeleitet oder berechnet werden.

Die Dunstabzugsvorrichtung ist zur Herstellung einer Datenverbindung mit dem Speisenzubereitungsgerät eingerichtet, sodass die Steuerung auf Informationen vom Speisenzubereitungsgerät zugreifen kann und das Einstellen des Parameters der Saugeinrichtung auf der Basis der Informationen erfolgt. Die Information kann eine Information des Speisenzubereitungsgeräts und/oder der Speisenzubereitung umfassen. In einer Ausgestaltung kann das Steuern der Hebe- und Senkeinrichtung auf der Basis der Informationen erfolgen.

Die Datenverbindung wird insbesondere mit dem auf der Aufstellfläche aufgestellten Speisenzubereitungsgerät hergestellt. Die Datenverbindung ist insbesondere eine drahtlose Verbindung, beispielsweise über Bluetooth, WiFi, Funk und/oder über das Internet. Eine kabelgebundene Verbindung ist jedoch nicht ausgeschlossen. Auf diese Weise kann die Steuerung auf Informationen des Speisenzubereitungsgeräts und/oder der Speisenzubereitung zugreifen. Die Steuerung kann dabei in der Dunstabzugsvorrichtung oder dem Speisenzubereitungsgerät angeordnet sein.

Insbesondere ist das Speisenzubereitungsgerät dazu eingerichtet, zumindest teilautomatisiert eine Speise mithilfe eines elektronisch gespeicherten Rezepts zuzubereiten. Das Rezept kann Befehle zum Steuern der Höhe und/oder der Saugeinrichtung umfassen. Alternativ oder ergänzend kann die Steuerung aus dem Rezept Informationen über eine benötigte Höhe und/oder einen Parameter der Saugeinrichtung ableiten. Dies kann z. B. derart erfolgen, dass aus dem Rezeptschritt "Dampfgaren" das Vorhandensein eines entsprechenden Zubehörteils abgeleitet wird und/oder aus dem Rezeptschritt "Zwiebeln anbraten" die Notwendigkeit einer besonders starken Saugleistung abgeleitet wird.

In einer Ausgestaltung ist die Steuerung dazu eingerichtet, auf unterschiedliche Profile zuzugreifen, wobei in jedem Profil Parameter der Saugeinrichtung und/oder Informationen zu Steuern der Hebe- und Senkeinrichtung hinterlegt sind. Auf diese Weise kann das Einstellen des Parameters der Saugeinrichtung bzw. das Steuern der Hebe- und Senkeinrichtung auf der Basis eines Profils erfolgen. Ein Profil meint insbesondere ein digital gespeichertes Profil. In jedem Profil können Informationen zu Höhenpositionen und/oder Parameter der Saugeinrichtung, wie z. B. Saugleistungen hinterlegt sein. Die Profile können in der Dunstabzugsvorrichtung, im Bereich der Steuerung oder extern gespeichert sein. Ist der Speicherort der Profile räumlich getrennt von der Steuerung, ist eine Datenverbindung zwischen der Steuerung und dem externen Speicherort vorhanden oder herstellbar. Eine solche Datenverbindung kann beispielsweise über Bluetooth, WiFi, Funk und/oder über das Internet erfolgen. Die Steuerung ist dazu eingerichtet, die im Profil hinterlegte Höhe und/oder den Parameter der Saugeinrichtung automatisch einzustellen. Eine solche Einstellung kann beispielsweise ausgelöst werden durch eine Eingabe durch einen Benutzer oder ein automatisiertes Erkennen eines Benutzers. Eine Benutzereingabe kann z. B. an einer Eingabeeinrichtung der Dunstabzugsvorrichtung, an einem tragbaren elektronischen Gerät oder an einer Eingabeeinrichtung des Speisenzubereitungsgeräts erfolgen.

In einer Ausführungsform ist im Bereich einer Oberseite des Schranks zumindest eine und insbesondere mehrere Steckdosen zum Anschließen des Speisenzubereitungsgeräts und ggf. weiterer Küchengeräte angeordnet. Insbesondere ist die Steckdose an der Oberseite oder an einer auf der Oberseite befindlichen Steckdosenleiste angeordnet. Der Schrank kann ein Anschlusskabel mit einem Stecker zum elektrischen Verbinden mit einer Steckdose in der Nähe der Dunstabzugsvorrichtung aufweisen.

In einer Ausführungsform ist am Gehäuse mindestens eine Beleuchtungseinrichtung angeordnet. Die Beleuchtungseinrichtung insbesondere so ausgeführt, dass die Aufstellfläche und gegebenenfalls ein auf der Aufstellfläche aufgestelltes Speisenzubereitungsgerät beleuchtet werden. Zusätzlich oder alternativ kann auch eine Arbeitsplatte und/oder ein Arbeitsplattenelement der Dunstabzugsvorrichtung mit der Beleuchtungseinrichtung beleuchtet werden. In einer Ausführungsform ist ein Helligkeitssensor vorhanden und die Beleuchtungseinrichtung kann auf der Basis der detektierten Helligkeit automatisch gesteuert werden.

In einer Ausführungsform umfasst die Dunstabzugsvorrichtung mindestens eine Kamera, mit der ein Benutzer der Dunstabzugsvorrichtung und/oder des Speisenzubereitungsgeräts während der Speisenzubereitung fotografiert und/oder gefilmt werden kann. Auf diese Weise können während der Speisenzubereitung Fotos gemacht und Videokonferenzen durchgeführt werden. Beispielsweise kann digital gemeinsam gekocht werden.

In einer Ausführungsform umfasst die Dunstabzugsvorrichtung mindestens eine Kamera, mit der der Speisenzubereitungsvorgang fotografiert und/oder gefilmt werden kann. Auf diese Weise kann die Speisenzubereitung dokumentiert werden.

In einer Ausführungsform umfasst die Dunstabzugsvorrichtung eine Halterung für ein tragbares elektronisches Gerät, beispielsweise für ein Smartphone und/oder ein Tablet. Auf diese Weise wird die Benutzung elektronischer Geräte während der Speisezubereitung vereinfacht. Beispielsweise kann so auf eine digitale Rezeptplattform, auf Videoplattformen und/oder sonstige Unterhaltungsdienste zugegriffen werden und/oder es kann eine Videokonferenz durchgeführt werden.

In einer Ausführungsform umfasst die Dunstabzugsvorrichtung eine DatenSchnittstelle, mit der Daten mindestens einer Kamera an ein tragbares elektronisches Gerät gesendet werden können und/oder die Kamera über das tragbare elektronische Gerät gesteuert werden kann. Auf diese Weise kann eine Videokonferenz unter Verwendung einer Kamera der Dunstabzugsvorrichtung durchgeführt werden.

Ein weiterer Aspekt der Erfindung ist eine Verwendung einer erfindungsgemäßen Dunstabzugsvorrichtung mit einem Speisenzubereitungsgerät für eine Speisenzubereitung, wobei das Speisenzubereitungsgerät insbesondere während der Speisenzubereitung auf der Aufstellfläche der Dunstabzugsvorrichtung aufgestellt ist.

Ein weiterer Aspekt der Erfindung ist ein System zur Speisenzubereitung mit einer erfindungsgemäßen Dunstabzugsvorrichtung und einem Speisenzubereitungsgerät, wobei die Dunstabzugsvorrichtung und das Speisenzubereitungsgerät so ausgestaltet sind, dass das Speisenzubereitungsgerät auf der Aufstellfläche der Dunstabzugsvorrichtung aufgestellt werden kann.

Ein weiterer Aspekt der Erfindung betrifft ein System, welches die erfindungsgemäße Dunstabzugsvorrichtung sowie eine externe Steuerung umfasst, wobei die Dunstabzugsvorrichtung dazu eingerichtet ist, auf der Basis von Steuerbefehlen der externen Steuerung einen Parameter der Saugeinrichtung einzustellen und/oder die Hebe- und Senkeinrichtung zu steuern. Die externe Steuerung kann z. B. eine Datenverarbeitungseinheit eines tragbaren elektronischen Geräts, beispielsweise eines Smartphones oder eines Tablets, oder eines Speisenzubereitungsgeräts sein.

Ein weiterer Aspekt der Erfindung betrifft ein Verfahren zur Speisenzubereitung mit einem Speisenzubereitungsgerät und einer erfindungsgemäßen Dunstabzugsvorrichtung, wobei eine Speise in dem Speisenzubereitungsgerät zubereitet wird, wobei bei der Speisenzubereitung entstehender Dunst mittels der Dunstabzugsvorrichtung eingesaugt und gefiltert wird. Alle Merkmale, Ausführungsformen und Wirkungen der eingangs beschriebenen Vorrichtung gelten auch für die unabhängig beschriebenen Aspekte der Verwendung, der Systeme sowie des Verfahrens und umgekehrt.

Nachfolgend werden Ausführungsbeispiele der Erfindung auch anhand von Figuren näher erläutert. Merkmale der Ausführungsbeispiele können einzeln oder in einer Mehrzahl mit den beanspruchten Gegenständen kombiniert werden, sofern nichts Gegenteiliges angegeben wird. Die beanspruchten Schutzbereiche sind nicht auf die Ausführungsbeispiele beschränkt.

Es zeigen:
- Figur 1:: eine schematische Darstellung einer Dunstabzugsvorrichtung,
- Figur 2:: eine Küchenmaschine,
- Figur 3:: eine schematische Vorderansicht einer Dunstabzugsvorrichtung, sowie
- Figur 4:: eine schematische Seitenansicht einer Dunstabzugsvorrichtung.

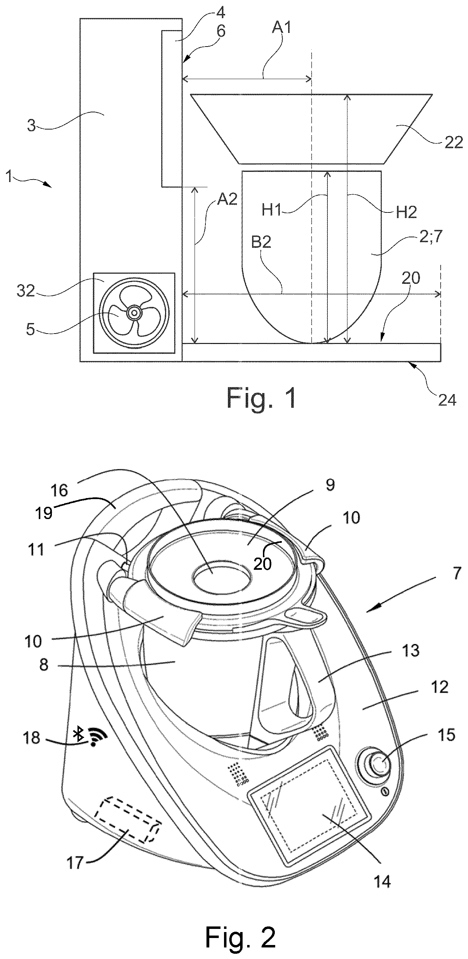

Figur 1 zeigt eine erfindungsgemäße Dunstabzugsvorrichtung 1 in Seitenansicht. Die Zeichnung ist nicht maßstabsgetreu, so dass Größen und Größenverhältnisse nicht notwendig der Realität entsprechen. In einem rechteckigen Gehäuse 3 mit einer Einsaugöffnung 6 sind ein Filter 4 und eine Saugeinrichtung 5 angeordnet. Durch die Saugeinrichtung 5 kann ein Dunststrom erzeugt werden, um Dunst aus einer Speisenzubereitung mit einem Speisenzubereitungsgerät 2 durch die Einsaugöffnung 6 einzusaugen. Der Dunststrom verläuft durch einen Strömungskanal durch das Gehäuse 3. Im Strömungskanal ist wenigstens ein Filter 4 angeordnet, um Stoffe aus dem Dunst zu entfernen. In einer seitlichen Wand das Gehäuses 3 ist ferner eine Auslassöffnung 32 vorhanden, durch die der gefilterte Dunst das Gehäuse 3 verlassen kann. Die Saugeinrichtung 5 befindet sich im hier gezeigten Beispiel im Gehäuse 3 hinter der Auslassöffnung 32. Die Dunstabzugsvorrichtung 1 umfasst eine ebene Unterseite 24 zum Aufstellen auf einer Küchenarbeitsfläche. Die Unterseite 24 wird von dem die Aufstellfläche 20 ausbildenden Teil und der Unterseite des Gehäuses 3 gemeinsam gebildet.

Ferner umfasst die Dunstabzugsvorrichtung 1 eine Aufstellfläche 20, auf die ein Speisenzubereitungsgerät 2 aufgestellt ist. Die Aufstellfläche 20 befindet sich an der Oberseite eines mit dem Gehäuse 3 fest verbundenen oder einstückig hergestellten Teils der Dunstabzugsvorrichtung 1, das zusammen mit dem Gehäuse 3 im hier gezeigten Beispiel eine L-Form ausbildet.

Die Aufstellfläche 20 ist eben und weist eine Tiefe B2 zwischen 20 cm und 40 cm auf. Die Tiefe B2 erstreckt sich beispielhaft über die gesamte Tiefe des die Aufstellfläche 20 aufweisenden Teils. Sie kann alternativ auch kleiner als dieses Teil sein, etwa wenn das Teil einen vorderen und/oder hinteren Rand aufweist. Ein horizontal gemessener Abstand A1 zwischen dem Mittelpunkt der Aufstellfläche 20 und der Einsaugöffnung 6 beträgt zwischen 10 cm und 25 cm. Ein vertikal gemessener Abstand A2 zwischen der Oberfläche der Aufstellfläche 20 und einem tiefsten Punkt der Einsaugöffnung 6 beträgt zwischen 30 cm und 45 cm. Ein vertikal gemessener Abstand zwischen der Oberfläche der Aufstellfläche 20 und einem höchsten Punkt der Einsaugöffnung 6 beträgt zwischen 45 cm und 55 cm.

Als Speisenzubereitungsgerät 2 ist eine Küchenmaschine 7 gezeigt. Diese umfasst einen Aufsatz 22 zum Dampfgaren, der auf ein Speisenzubereitungsgefäß der Küchenmaschine 7 aufgesetzt ist. Die Höhe H1 der Küchenmaschine 7 ohne den Aufsatz 22 beträgt 34 cm. Die Höhe H2 der Küchenmaschine 7 mit dem Aufsatz 22 beträgt 44 cm. Beim Dampfgaren wird Dunst an der Oberseite des Aufsatzes 22 freigesetzt. bei einer Speisenzubereitung ohne den Aufsatz 22 wird Dunst an der Oberseite des Speisenzubereitungsgefäßes freigesetzt. Die Einsaugöffnung 6 befindet sich in beiden Fällen nahe dem Punkt, an dem Dunst entsteht.

Die Figur 2 zeigt eine Küchenmaschine 7 mit einem Speisenzubereitungsgefäß 8. Auf dem Speisenzubereitungsgefäß 8 ist ein Deckelteil 9 aufgesetzt. Das Deckelteil 9 für das Speisenzubereitungsgefäß 8 ist durch Arme 10 verriegelt. Das Deckelteil 9 befindet sich zwischen den beiden Armen 10. Die Arme 10 können zwischen einer Öffnungsstellung und einer Verriegelungsstellung gedreht werden. Das Deckelteil 9 hat einen Sensor und zwar einen Kipphebel 11 eines elektrischen Schalters heruntergedrückt und so ausgelöst. Die Arme 10 und der Kipphebel 11 sind an einem Standteil 12 der Küchenmaschine 7 angebracht. Das Speisenzubereitungsgefäß 8 ist in das Standteil 12 eingesetzt und kann aus dem Standteil 12 herausgenommen werden. Um das Speisenzubereitungsgefäß 8 herausnehmen zu können, umfasst dieses einen Griff 13. Das Standteil 12 umfasst zur Bedienung ein berührungsempfindliches Display 14 und einen Drehschalter 15. Der Drehschalter 15 kann gedreht und gedrückt werden. Display 14 und Drehschalter 15 sind also Bedienelemente der Küchenmaschine 7. Über die Bedienelemente 14 und 15 können Steuerbefehle und/oder Daten eingegeben werden. Das Deckelteil 9 umfasst mittig eine Öffnung 16, die mit einem nicht gezeigten Verschluss verschlossen werden kann. Das Standteil 12 kann auf der Aufstellfläche aufgestellt werden.

Im Standteil 12 befindet sich eine Steuereinrichtung 17. Diese kann die Steuerung 21 zum Steuern der Saugeinrichtung sein oder mit dieser kommunizieren. Die Steuereinrichtung 17 kann demnach den Betrieb der Dunstabzugsvorrichtung 1 steuern. Im Standteil 12 befindet sich eine Funkeinheit 18, über die Daten drahtlos gesendet und empfangen werden können. Die Funkeinheit 18 kann beispielsweise per Bluetooth und/oder WiFi Daten senden sowie empfangen. Über die Funkeinheit 18 kann die Steuereinrichtung 17 beispielsweise auf ein extern elektronisch gespeichertes Rezept zugreifen. Die Steuereinrichtung 17 kann mithilfe des Rezepts die Zubereitung einer Speise steuern. Über die Funkeinheit 18 kann die Steuereinrichtung 17 mit der Dunstabzugsvorrichtung 1 drahtlos Daten austauschen, also kommunizieren. Über die Funkeinheit 18 können Daten mit einer Steuerung der Dunstabzugsvorrichtung 1 ausgetauscht werden. Rezepte können alternativ oder ergänzend in einer Speichereinheit der Steuereinrichtung gespeichert sein.

Im Speisenzubereitungsgefäß 8 befindet sich ein Rühr- und/oder Schneidwerkzeug, das mit einem Motor angetrieben werden kann. Der Motor befindet sich im Standteil 12. Im Grund des Speisenzubereitungsgefäßes 8 ist eine Heizeinrichtung vorhanden, die mit dem Standteil 12 für ein Erhitzen stromleitend verbunden werden kann. Im Standteil ist außerdem der Motor für das Drehen der Arme 10 angeordnet.

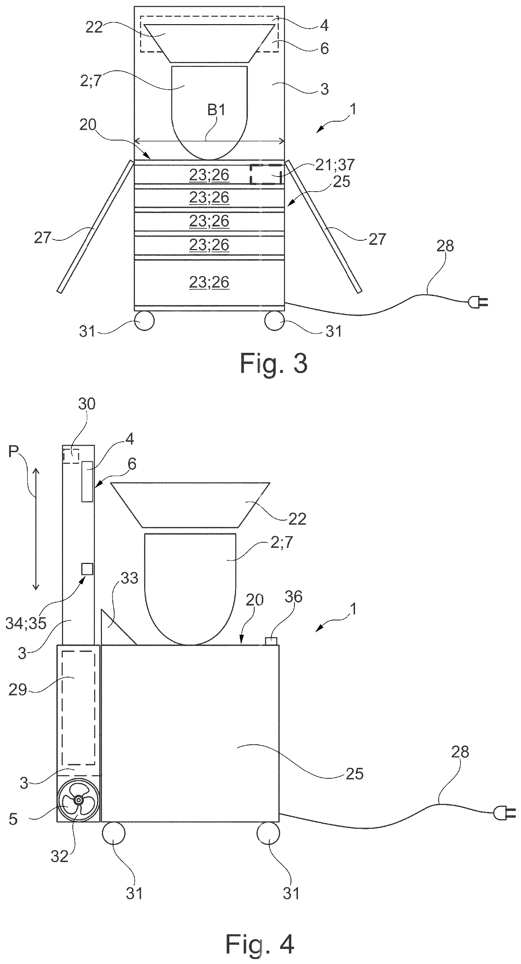

Figur 3 zeigt eine Ausgestaltung einer Dunstabzugsvorrichtung 1 von vorn, bei der unter der Aufstellfläche 20 ein Schrank 25 angeordnet ist. In dem Schrank sind 5 von außen zugängliche Stauräume 23 in Form von Schubladen 26 angeordnet. Hier können beispielsweise das Speisenzubereitungsgerät 2 und/oder Zubehörteile wie der Aufsatz 22 verstaut werden. Durch Rollen 31 an der Unterseite kann der Schrank 25 gefahren werden. Der Schrank umfasst ferner an jeder Seite ein klappbares Arbeitsplattenelement 27. Dieses kann wahlweise in horizontaler Ausrichtung fixiert werden, um zusätzliche Arbeitsfläche zu schaffen, oder in vertikaler Ausrichtung verstaut werden. Der Schrank umfasst ein Anschlusskabel 28 für die Stromversorgung der Saugeinrichtung 5 und insbesondere auch des Speisenzubereitungsgeräts 2.

Die Aufstellfläche 20 weist eine Breite B1 zwischen 25 cm und 40 cm auf. Die Breite B1 der Aufstellfläche erstreckt sich beispielhaft über die gesamte Breite des Gehäuses 3. Sie kann alternativ auch kleiner als die Breite des Gehäuses sein.

Ferner ist eine Steuerung 21 der Dunstabzugsvorrichtung 1 und optional auch eine Datenschnittstelle 37 im Schrank 25 angeordnet. Diese können alternativ im Gehäuse 3 untergebracht sein.

Figur 4 zeigt eine Ausgestaltung einer Dunstabzugsvorrichtung 1, insbesondere die der Figur 3, von der Seite. Das Gehäuse 3 umfasst hier einen unten hinter dem Schrank 25 angeordneten äußeren, festen Teil und einen oben hinter dem Speisenzubereitungsgerät 2 angeordneten inneren, beweglichen Teil. Mittels einer Hebe- und Senkeinrichtung 29, die sich beispielsweise im äußeren Teil befinden kann, kann die Höhe der Einsaugöffnung 6 in Abhängigkeit der benötigten Höhe eingestellt werden. So kann etwa beim Dampfgaren mit dem Aufsatz 22 eine höhere Position und bei der Speisenzubereitung ohne den Aufsatz 22 eine niedrigere Position manuell oder automatisch eingestellt werden. Die genannten Bewegungen werden durch den Pfeil P angedeutet.

Die Hebe- und Senkeinrichtung 29 ermöglicht es ferner, den inneren Teil aus der dargestellten Nutzposition nach unten zu bewegen und im äußeren Teil zu versenken und in entgegengesetzter Richtung zurück nach oben zu bewegen. Auf diese Weise kann der innere Teil des Gehäuses 3, der die Einsaugöffnung 6 umfasst, bei Nichtbenutzung platzsparend verstaut werden.

Die Saugeinrichtung 5 und/oder die Auslassöffnung 32 befindet sich im unteren bzw. äußeren Teil des Gehäuses 3. Im oberen Teil kann sich ein Sensor 30 zur Messung einer Eigenschaft des Dunstes und/oder ein Sensor 30 zu Ermittlung einer Information bezüglich einer Höhe Speisenzubereitungsgeräts 2 befinden. Ein Sensor 30 kann sich auch an anderer Position befinden, etwa an der Vorderseite des Gehäuses 3. Die Dunstabzugsvorrichtung 1 kann ferner eine Steckdosenleiste 33 aufweisen. Die Steckdosen können schräg gestellt sein, damit ein Stecker eines Speisenzubereitungsgeräts 2 besonders leicht zugänglich ist. Die Dunstabzugsvorrichtung 1 kann ferner eine Beleuchtungseinrichtung 34, eine Kamera 35 und/oder eine Halterung 36 für ein tragbares elektronisches Gerät aufweisen.

## Patentansprüche

1. Dunstabzugsvorrichtung (1) für ein Speisenzubereitungsgerät (2), nämlich für eine Küchenmaschine zur Speisenzubereitung durch Zerkleinern, Rühren und/oder Erhitzen, umfassend ein Gehäuse (3) mit einer Einsaugöffnung (6), ein im Gehäuse (3) angeordnetes Filter (4) und eine Saugeinrichtung (5), mit der Dunst aus einer Speisenzubereitung mit dem Speisenzubereitungsgerät (2) durch die Einsaugöffnung (6) eingesaugt und durch das Filter (4) gefördert werden kann, wobei die Dunstabzugsvorrichtung (1) ferner eine Aufstellfläche (20) zum Aufstellen des Speisenzubereitungsgeräts (2) aufweist, **dadurch gekennzeichnet, dass** die Dunstabzugsvorrichtung (1) dazu eingerichtet ist, auf der Basis von Steuerbefehlen einer Steuerung (21) einen Parameter der Saugeinrichtung (5) einzustellen, wobei die Dunstabzugsvorrichtung (1) zur Herstellung einer Datenverbindung mit dem Speisenzubereitungsgerät (2) eingerichtet ist, sodass die Steuerung (21) auf Informationen vom Speisenzubereitungsgerät (2) zugreifen kann und das Einstellen des Parameters der Saugeinrichtung (5) auf der Basis der Informationen erfolgt.

2. Dunstabzugsvorrichtung (1) nach dem vorhergehenden Anspruch, **dadurch gekennzeichnet, dass** die Aufstellfläche (20) eine im Wesentlichen ebene Fläche ist und/oder eine Breite (B1) von höchstens 75 cm und eine Tiefe (B2) von höchstens 40 cm aufweist.

3. Dunstabzugsvorrichtung (1) nach einem der vorhergehenden Ansprüche, **dadurch gekennzeichnet, dass** ein horizontal gemessener Abstand (A1) zwischen einem Mittelpunkt der Aufstellfläche (20) und der Einsaugöffnung (6) kleiner ist als 25 cm, bevorzugt kleiner als 20 cm,
und/oder dass ein vertikal gemessener Abstand (A2) zwischen der Aufstellfläche (20) und der Einsaugöffnung (6) nicht geringer ist als 20 cm und/oder nicht größer ist als 60 cm.

4. Dunstabzugsvorrichtung (1) nach einem der vorhergehenden Ansprüche, **dadurch gekennzeichnet, dass** das Gehäuse (3) und ein die Aufstellfläche (20) aufweisender Teil der Dunstabzugsvorrichtung (1) einstückig ausgeführt sind oder fest miteinander verbunden oder verbindbar sind.

5. Dunstabzugsvorrichtung (1) nach einem der vorhergehenden Ansprüche, **dadurch gekennzeichnet, dass** im Gehäuse (3) wenigstens ein von außen zugänglicher Stauraum (23) zum Verstauen von Gegenständen vorhanden ist, wobei insbesondere ein Verschluss zum Verschließen des Stauraums (23) vorhanden ist.

6. Dunstabzugsvorrichtung (1) nach einem der Ansprüche 1 bis 5, **dadurch gekennzeichnet, dass** die Dunstabzugsvorrichtung (1) eine Unterseite (24) zum Aufstellen auf einer Arbeitsfläche aufweist.

7. Dunstabzugsvorrichtung (1) nach einem der Ansprüche 1 bis 5, **dadurch gekennzeichnet, dass** die Dunstabzugsvorrichtung (1) unter der Aufstellfläche (20) einen Schrank (25) umfasst, in dem mehrere von außen zugängliche Stauräume (23) angeordnet sind, wobei die Stauräume (23) insbesondere als Schubladen (26) ausgeführt sind.

8. Dunstabzugsvorrichtung (1) nach einem der vorhergehenden Ansprüche, **dadurch gekennzeichnet, dass** die Dunstabzugsvorrichtung (1) eine Hebe- und Senkeinrichtung (29) aufweist, mit welcher zumindest ein Teil des Gehäuses (3), der die Einsaugöffnung (6) aufweist, nach oben und unten bewegt werden kann, um auf diese Weise unterschiedliche Höhenpositionen einzustellen.

9. Dunstabzugsvorrichtung (1) nach einem der vorhergehenden Ansprüche, **dadurch gekennzeichnet, dass** die Dunstabzugsvorrichtung (1) eine Hebe- und Senkeinrichtung (29) aufweist, mit welcher zumindest ein Teil des Gehäuses (3), der die Einsaugöffnung (6) aufweist, aus einer Nutzposition nach unten bewegt und versenkt werden kann und aus der versenkten Position wieder nach oben bewegt werden kann.

10. Dunstabzugsvorrichtung (1) nach einem der vorhergehenden Ansprüche, **dadurch gekennzeichnet, dass** die Dunstabzugsvorrichtung (1) dazu eingerichtet ist, auf der Basis von Steuerbefehlen der Steuerung (21) die Hebe- und Senkeinrichtung (29) zu steuern.

11. Dunstabzugsvorrichtung (1) nach dem vorhergehenden Anspruch, **dadurch gekennzeichnet, dass** die Dunstabzugsvorrichtung (1) einen Sensor (30) zur Messung einer Eigenschaft eines Dunstes aus einer Speisenzubereitung aufweist und die Steuerung (21) dazu eingerichtet ist, eine Saugleistung der Saugeinrichtung (5) auf der Basis der gemessenen Eigenschaft zu steuern,
und/oder dass die Dunstabzugsvorrichtung (1) einen Sensor (30) zur Ermittlung einer Information bezüglich einer Höhe des Speisenzubereitungsgeräts (2) aufweist und die Steuerung (21) dazu eingerichtet ist, die Hebe- und Senkeinrichtung (29) auf der Basis der durch den Sensor (30) ermittelten Information zu steuern.

12. Dunstabzugsvorrichtung (1) nach einem der zwei vorhergehenden Ansprüche, **dadurch gekennzeichnet, dass** das Steuern der Hebe- und Senkeinrichtung (29) auf der Basis der Informationen vom Speisenzubereitungsgerät (2) erfolgt.

13. Dunstabzugsvorrichtung (1) nach einem der drei vorhergehenden Ansprüche, **dadurch gekennzeichnet, dass** die Steuerung (21) dazu eingerichtet ist, auf unterschiedliche Profile zuzugreifen, wobei in jedem Profil Parameter der Saugeinrichtung (5) und/oder Informationen zum Steuern der Hebe- und Senkeinrichtung (29) hinterlegt sind.

14. Verwendung einer Dunstabzugsvorrichtung (1) gemäß einem der Ansprüche 1 bis 13 mit einem Speisenzubereitungsgerät (2) für eine Speisenzubereitung, wobei das Speisenzubereitungsgerät (2) auf der Aufstellfläche (20) der Dunstabzugsvorrichtung (1) aufgestellt ist.

15. System zur Speisenzubereitung mit einer Dunstabzugsvorrichtung (1) gemäß einem der Ansprüche 1 bis 13 und einem Speisenzubereitungsgerät (2), wobei die Dunstabzugsvorrichtung (1) und das Speisenzubereitungsgerät (2) so ausgestaltet sind, dass das Speisenzubereitungsgerät (2) auf der Aufstellfläche (20) der Dunstabzugsvorrichtung (1) aufgestellt werden kann.

## Claims

1. Vapour extraction device (1) for a food preparation appliance (2), namely for a food processor for food preparation by chopping, stirring and/or heating, comprising a housing (3) with a suction opening (6), a filter (4) arranged in the housing (3) and a suction device (5), with which vapour from a food preparation with the food preparation appliance (2) can be sucked in through the suction opening (6) and conveyed through the filter (4), wherein the vapour extraction device (1) further comprises a placement surface (20) for placing the food preparation appliance (2), **characterised in that** the vapour extraction device (1) is configured to set a parameter of the suction device (5) on the basis of control commands of a controller (21), wherein the vapour extraction device (1) is configured to establish a data connection with the food preparation appliance (2), so that the controller (21) can access information from the food preparation appliance (2) and the setting of the parameter of the suction device (5) takes place on the basis of the information.

2. Vapour extraction device (1) according to the preceding claim, **characterised in that** the placement surface (20) is a substantially flat surface and/or has a width (B1) of at most 75 cm and a depth (B2) of at most 40 cm.

3. Vapour extraction device (1) according to one of the preceding claims, **characterised in that** a horizontally measured distance (A1) between a centre point of the placement surface (20) and the suction opening (6) is less than 25 cm, preferably less than 20 cm,
and/or that a vertically measured distance (A2) between the placement surface (20) and the suction opening (6) is not less than 20 cm and/or not more than 60 cm.

4. Vapour extraction device (1) according to one of the preceding claims, **characterised in that** the housing (3) and a part of the vapour extraction device (1) comprising the placement surface (20) are formed in one piece or are fixedly connected or connectable to one another.

5. Vapour extraction device (1) according to one of the preceding claims, **characterised in that** at least one storage space (23) accessible from outside for storing objects is present in the housing (3), wherein in particular a closure for closing the storage space (23) is present.

6. Vapour extraction device (1) according to one of claims 1 to 5, **characterised in that** the vapour extraction device (1) has an underside (24) for placement on a work surface.

7. Vapour extraction device (1) according to one of claims 1 to 5, **characterised in that** the vapour extraction device (1) comprises a cabinet (25) beneath the placement surface (20), in which a plurality of storage spaces (23) accessible from outside are arranged, wherein the storage spaces (23) are in particular designed as drawers (26).

8. Vapour extraction device (1) according to one of the preceding claims, **characterised in that** the vapour extraction device (1) has a raising and lowering device (29), with which at least a part of the housing (3), which comprises the suction opening (6), can be moved upwards and downwards in order to set different height positions in this way.

9. Vapour extraction device (1) according to one of the preceding claims, **characterised in that** the vapour extraction device (1) has a raising and lowering device (29), with which at least a part of the housing (3), which comprises the suction opening (6), can be moved downwards from a use position and retracted and can be moved upwards again from the retracted position.

10. Vapour extraction device (1) according to one of the preceding claims, **characterised in that** the vapour extraction device (1) is configured to control the raising and lowering device (29) on the basis of control commands from the controller (21).

11. Vapour extraction device (1) according to the preceding claim, **characterised in that** the vapour extraction device (1) has a sensor (30) for measuring a property of a vapour from a food preparation and the controller (21) is configured to control a suction power of the suction device (5) on the basis of the measured property,
and/or that the vapour extraction device (1) has a sensor (30) for determining an information regarding a height of the food preparation appliance (2) and the controller (21) is configured to control the raising and lowering device (29) on the basis of the information determined by the sensor (30).

12. Vapour extraction device (1) according to one of the two preceding claims, **characterised in that** the controlling of the raising and lowering device (29) takes place on the basis of the information from the food preparation appliance (2).

13. Vapour extraction device (1) according to one of the three preceding claims, **characterised in that** the controller (21) is configured to access different profiles, wherein parameters of the suction device (5) and/or information for controlling the raising and lowering device (29) are stored in each profile.

14. Use of a vapour extraction device (1) according to one of claims 1 to 13 with a food preparation appliance (2) for a food preparation, wherein the food preparation appliance (2) is placed on the placement surface (20) of the vapour extraction device (1).

15. System for food preparation with a vapour extraction device (1) according to one of claims 1 to 13 and a food preparation appliance (2), wherein the vapour extraction device (1) and the food preparation appliance (2) are configured such that the food preparation appliance (2) can be placed on the placement surface (20) of the vapour extraction device (1).

## Revendications

1. Dispositif d'hotte aspirante (1) pour un appareil de préparation d'aliments (2), à savoir pour une machine de cuisine pour la préparation d'aliments par broyage, remuage et/ou chauffage, comprenant un boîtier (3) avec une ouverture d'aspiration (6), un filtre (4) disposé dans le boîtier (3) et un dispositif d'aspiration (5), avec lequel de la vapeur provenant d'une préparation d'aliments avec l'appareil de préparation d'aliments (2) peut être aspirée (6) et acheminée à travers le filtre (4), dans lequel le dispositif d'hotte aspirante (1) comporte en outre une surface d'installation (20) pour installer l'appareil de préparation d'aliments (2), **caractérisé en ce que** le dispositif d'hotte aspirante (1) est conçu pour régler un paramètre du dispositif d'aspiration (5) sur la base d'instructions de commande d'une unité de commande (21), dans lequel le dispositif d'hotte aspirante (1) est conçu pour établir une connexion de données avec l'appareil de préparation d'aliments (2), de sorte que la commande (21) peut accéder aux informations de l'appareil de préparation d'aliments (2) et que le réglage du paramètre du dispositif d'aspiration (5) s'effectue sur la base des informations.

2. Dispositif d'hotte aspirante (1) selon la revendication précédente, **caractérisé en ce que** la surface d'installation (20) est une surface essentiellement plane et/ou comporte une largeur (B1) maximale de 75 cm et une profondeur (B2) maximale de 40 cm.

3. Dispositif d'hotte aspirante (1) selon l'une des revendications précédentes, **caractérisé en ce qu'**une distance mesurée horizontalement (A1) entre un centre de la surface d'installation (20) et l'ouverture d'aspiration (6) est inférieure à 25 cm, de préférence inférieure à 20 cm,
et/ou **en ce qu'**une distance mesurée verticalement (A2) entre la surface d'installation (20) et l'ouverture d'aspiration (6) n'est pas inférieure à 20 cm et/ou n'est pas supérieure à 60 cm.

4. Dispositif d'hotte aspirante (1) selon l'une des revendications précédentes, **caractérisé en ce que** le boîtier (3) et une partie du dispositif d'hotte aspirante (1) comportant la surface d'installation (20) sont réalisés d'une seule pièce, ou sont reliés, ou peuvent être reliés de manière fixe l'un à l'autre.

5. Dispositif d'hotte aspirante (1) selon l'une des revendications précédentes, **caractérisé en ce qu'**au moins un espace de rangement (23), accessible de l'extérieur, est prévu dans le boîtier (3) pour ranger des objets, dans lequel une fermeture est notamment prévue pour fermer l'espace de rangement (23).

6. Dispositif d'hotte aspirante (1) selon l'une des revendications 1 à 5, **caractérisé en ce que** le dispositif d'hotte aspirante (1) comporte une face inférieure (24) pour l'installation sur un plan de travail.

7. Dispositif d'hotte aspirante (1) selon l'une des revendications 1 à 5, **caractérisé en ce que** le dispositif d'hotte aspirante (1) comprend, sous la surface d'installation (20), une armoire (25) dans laquelle sont disposés plusieurs espaces de rangement (23), accessibles de l'extérieur, dans lequel les espaces de rangement (23) sont notamment réalisés comme des tiroirs (26).

8. Dispositif d'hotte aspirante (1) selon l'une des revendications précédentes, **caractérisé en ce que** le dispositif d'hotte aspirante (1) comporte un dispositif de levage et d'abaissement (29), avec lequel au moins une partie du boîtier (3), qui comporte l'ouverture d'aspiration (6), peut être déplacée vers le haut et vers le bas, pour régler ainsi différentes positions en hauteur.

9. Dispositif d'hotte aspirante (1) selon l'une des revendications précédentes, **caractérisé en ce que** le dispositif d'hotte aspirante (1) comporte un dispositif de levage et d'abaissement (29), avec lequel au moins une partie du boîtier (3), qui comporte l'ouverture d'aspiration (6), peut, à partir d'une position d'usage, être déplacée vers le bas et escamotée, et, à partir de la position escamotée, peut être remontée.

10. Dispositif d'hotte aspirante (1) selon l'une des revendications précédentes, **caractérisé en ce que** le dispositif d'hotte aspirante (1) est conçu pour commander le dispositif de levage et d'abaissement (29) sur la base des instructions de commande de la commande (21).

11. Dispositif d'hotte aspirante (1) selon la revendication précédente, **caractérisé en ce que** le dispositif d'hotte aspirante (1) comporte un capteur (30) pour mesurer une propriété d'une vapeur provenant d'une préparation d'aliments, et la commande (21) est conçue pour commander une puissance d'aspiration du dispositif d'aspiration (5) sur la base de la propriété mesurée,
et/ou **en ce que** le dispositif d'hotte aspirante (1) comprend un capteur (30) pour déterminer une information relative à la hauteur de l'appareil de préparation d'aliments (2), et la commande (21) est conçue pour commander le dispositif de levage et d'abaissement (29) sur la base de l'information déterminée par le capteur (30).

12. Dispositif d'hotte aspirante (1) selon l'une des deux revendications précédentes, **caractérisé en ce que** la commande du dispositif de levage et d'abaissement (29) s'effectue sur la base des informations de l'appareil de préparation d'aliments (2).

13. Dispositif d'hotte aspirante (1) selon l'une des trois revendications précédentes, **caractérisé en ce que** la commande (21) est conçue pour accéder à différents profils, dans lequel des paramètres du dispositif d'aspiration (5), et/ou des informations pour commander le dispositif de levage et d'abaissement (29), sont déposés dans chaque profil.

14. Utilisation d'un dispositif d'hotte aspirante (1) selon l'une des revendications 1 à 13 avec un appareil de préparation d'aliments (2) pour une préparation d'aliments, dans lequel l'appareil de préparation d'aliments (2) est installé sur la surface d'installation (20) du dispositif d'hotte aspirante (1).

15. Système de préparation d'aliments, avec un dispositif d'hotte aspirante (1) selon l'une des revendications 1 à 13, et un appareil de préparation d'aliments (2), dans lequel le dispositif d'hotte aspirante (1) et l'appareil de préparation d'aliments (2) sont conçus de telle sorte que l'appareil de préparation d'aliments (2) peut être installé sur la surface d'installation (20) du dispositif d'hotte aspirante (1).
